# FASCICULE DE BREVET EUROPEEN

(11) **EP 0 409 695 B1**
(45) Date de publication et mention de la délivrance du brevet: **29.12.1993**
(21) Numéro de dépôt: 90402001.3
(22) Date de dépôt: 12.07.1990
(51) Int. Cl.: C03B 23/035, C03B 23/025

(54) **Procédé et dispositif d'obtention de feuilles de verre bombées et/ou émaillées**
Verfahren und Vorrichtung zum Herstellen von gebogenen oder/und emaillierten Glasscheiben
Method and apparatus for manufacturing curved and/or enamelled sheets of glass

(30) Priorité: 18.07.1989 FR 8909597
(43) Date de publication de la demande: 23.01.1991
(73) Titulaire: SAINT-GOBAIN VITRAGE INTERNATIONAL, 92400 Courbevoie (FR)
(72) Inventeur: Letemps, Bernard, F-60150 Thourotte (FR); Mathivat, Denis, F-60150 Thourotte (FR); Malard, François, F-60200 Compiègne (FR)
(74) Mandataire: Menes, Catherine

(56) Documents cités:
- EP-A- 0 240 418
- EP-A- 0 241 355
- EP-A- 0 298 426
- FR-A- 998 668
- FR-A- 2 085 464

## Description

L'invention a trait à un procédé - et un dispositif de mise en oeuvre de ce procédé - pour l'obtention de feuilles de verre bombées et/ou émaillées utilisées notamment à titre de vitrages automobiles. Elle concerne plus spécialement la mise en oeuvre de techniques selon lesquelles les feuilles de verre sont réchauffées à plat dans un four dit traversant, amenées dans une station de bombage sous un élément supérieur, éventuellement en forme, soulevées et appliquées par aspiration contre ledit élément supérieur, puis déposées sur un élément inférieur sur lequel elles sont conduites dans une station de refroidissement notamment une station de trempe.

Une préoccupation constante en matière de production de vitrages automobiles est le respect d'une qualité optique aussi grande que possible, ce qui suppose bien évidemment l'absence de marques de pinces ou de griffures. Aun niveau de qualité encore plus sévère, cela suppose de plus l'absence de défauts optiques dus au traitement thermique que suit la feuille de verre. Un exemple plus particulier d'un tel défaut est celui généré par des déformations de la feuille de verre consécutives à son soutien non uniforme par exemple par des rouleaux entre lesquels la feuille de verre portée à température élevée est susceptible de s'affaisser sous l'action de son propre poids. Les ondulations ainsi formées ne créent pas à proprement dit de défauts de galbe, qui est conforme à celui souhaité d'un point de vue macroscopique, mais une mire vue au travers du vitrage est déformée.

Ces ondulations sont produites dans la dernière partie du four et/ou dans la station de bombage lorsque la température du verre est à son maximum. Pour les éviter, il est indispensable de maintenir cette température en-dessous d'un seuil où la cinétique de la réaction de déformation est encore suffisamment faible par rapport à la vitesse de défilement des feuilles de verre. Les auteurs de la présente invention ont constaté que cette condition est généralement réalisée si la température de la feuille de verre n'excède pas environ 630°C. Or une telle temperature est nettement insuffisante au moins dans deux cas éventuellement cumulatifs : la feuille de verre doit être pliée selon un petit rayon de courbure et/ou la feuille de verre est couverte sur toute ou partie de sa surface par une composition d'émaillage.

Dans le premier cas, un verre trop froid risque d'entraîner la casse du vitrage dont la viscosité ne permet pas le relâchement des contraintes exercées lors du bombage, sauf à procéder infiniment lentement, ce qui n'est pas compatible avec les exigences d'une production industrielle. Il est certes connu de l'art de provoquer une surchauffe très localisée en répandant sur le verre à son entrée du four une poudre du type noir de carbone et/ou d'équiper le four de rampes de chauffage additionnel déplacées parallèlement au verre (voir par exemple US-A-4441987 ou DE-A-3742481), mais ou ces dispositifs n'agissent que sur une faible partie de la surface du vitrage, ou exactement les mêmes problèmes d'ondulation vont se poser en sortie de four.

Dans le second cas, une température insuffisante ne permet pas la cuisson complète de la composition d'émaillage. Lorsque la feuille de verre est amenée au contact de l'élément supérieur, celui-ci - ou plus précisément son revêtement, par exemple à base de papier en fibres réfractaires - risque d'être taché par la composition encore liquide, et de souiller les vitrages suivants. Indépendamment de la courbure qui doit ou non être conférée à la feuille de verre, il est donc préférable là encore, d'opérer avec des feuilles de verre dont la température est par exemple supérieure à 650 C, ce qui conduit aux défauts optiques évoqués précédemment.

D'autre part, il est connu du brevet EP-B1-169 770 un procédé de bombage selon lequel la feuille de verre est plaquée contre un élément supérieur en forme à l'aide d'un courant d'air chaud ascendant qui peut éventuellement servir pour parfaire la chauffe de la feuille de verre. Toutefois, aucune localisation de cette surchauffe n'est possible et de plus, le courant gazeux chaud agit sur la face inférieure du vitrage, aidé à la cuisson de la face supérieure émaillée avant que celle-ci ne vienne en contact avec l'élément supérieur.

Du brevet FR-B-998 668 il est par ailleurs connu un procédé de mise en forme de plaques de verre consistant dans l'exécution d'une ébauche puis dans un second temps dans le réchauffage exclusif des parties devant être les plus bombées, la ventouse retenant la partie centrale des ébauches étant refroidie. Un tel procédé était adapté à la production d'objets de petites dimensions, non trempés et ne peut pas être utilisé pour produire des vitrages automobiles trempés, respectant les normes actuelles de qualité.

L'invention a pour but l'amélioration des techniques d'obtention de feuilles de verre bombées et/ou émaillées, puis éventuellement trempées, dans lesquelles un élément supérieur intervient, en vue de la réalisation de vitrages présentant une grande qualité optique et notamment exempts de défauts du type ondulations.

L'invention part d'un procédé d'obtention de vitrages bombés-trempés conforme par exemple aux enseignements des demandes de brevets FR-A-2085464, EP-A-3391, EP-A-240418 ou EP-A-241355. Selon un tel procédé, les feuilles de verre sont chargées à plat une à une dans un four de réchauffage qu'elles traversent convoyées par exemple par un lit de rouleaux, amenées dans une station de bombage montée à l'extrémité du four de réchauffage constituée par une enceinte fermée éventuellement isolée thermiquement et sont enfin conduites dans une station de refroidissement, notamment de trempe thermique. Dans la station de bombage, la feuille de verre est positionnée sous un élément supérieur éventuellement en forme, est plaquée contre l'élément supérieur par exemple en étant soulevée par une aspiration due à une dépression créée au voisinage de la feuille de verre, puis est acheminée vers la station de refroidissement et est pour cela par exemple déposée sur un élément inférieur de préférence constitué par un cadre annulaire.

Le perfectionnement selon l'invention consiste en ce que la température des feuilles de verre est assez basse à l'entrée de ces dernières dans la station de bombage, pour éviter des défauts du type ondulations et en ce qu'on opére un soufflage d'air chaud en direction de l'élément supérieur entre deux traitements et éventuellement jusqu'à ce que la feuille de verre soit relâchée sur l'élément inférieur. Ce soufflage d'air chaud est tel que la température de l'élément supérieur est suffisante pour essentiellement compléter le réchauffement des feuilles de verre pour leur bombage et/ou pour la cuisson en surface de l'émail quand lesdites feuilles de verre sont mises en contact avec l'élément supérieur. Ce soufflage dirigé d'air chaud conduit à une surchauffe de l'élément supérieur de sorte que la température dudit élément supérieur puisse excéder d'environ 20 à 150°C la température d'entrée des feuilles de verre dans la station de bombage.

Il doit être noté que le soufflage selon l'invention a uniquement pour but le réchauffement de l'élément supérieur, et éventuellement celui de la face arrière de la feuille de verre, de sorte que le réchauffement de la feuille de verre soit complété. Ceci le distingue nettement des procédés connus par exemple de EP-A-298426 selon lesquels la feuille de verre subit un pressage pneumatique au moyen d'un courant d'air chaud dont l'essentiel est la force qu'il exerce sur le verre et non sa capacité d'un apport thermique renouvelé de façon permanente.

Lorsqu'elle est approchée de l'élément supérieur, et plus encore lorsqu'elle est appliquée contre celui-ci, la feuille de verre acquiert rapidement le complément calorifique qui lui est nécessaire aussi sa température d'entrée dans la station de bombage peut être maintenue relativement basse, inférieure à 650° C ou mieux à 630° C pour une feuille de verre standard dont l'épaisseur est de 3,2 mm. Pour du verre plus mince, par exemple de 2 mm d'épaisseur, la température du four sera avantageusement maintenue inférieure à 610-615° C. Pour du verre plus épais, par exemple de 4 mm, la température de 630° C peut être maintenue, le complément de chauffe étant apporté par le soufflage selon l'invention.

Avantageusement, le soufflage d'air chaud n'est pas uniforme, mais est dirigé préférentiellement vers certaines parties de l'élément supérieur, notamment sur les parties en correspondance avec les zones de la feuille de verre devant subir le plus grand bombage et/ou émaillage et qui sont généralement situées au voisinage des bords de la feuille de verre et par conséquent de l'élément supérieur. Mais même dans ce cas, il ne s'agit pas d'un chauffage réellement localisé dans la mesure où un tiers à la moitié de la surface de l'élément supérieur est par exemple visé par le courant d'air chaud dirigé vers l'élément supérieur.

Cette localisation sur les bords de l'élément supérieur peut être obtenue par un maintien entre deux vitrages de l'aspiration périphérique utilisée pour soulever et appliquer la feuille de verre et connue des demandes de brevets FR-A-2085464, EP-A-240418 et EP-A-241355 précitées. Cette aspiration crée un flux gazeux longeant les bords de l'élément supérieur qui sont ainsi préférentiellement surchauffés. Le niveau d'aspiration périphérique employé est de préférence plus faible que celui nécessaire pour faire décoller la feuille de verre au-dessus du convoyeur à rouleaux mais peut être toutefois suffisant pour prendre en charge une partie du poids de la feuille de verre, cet allégement favorisant le positionnement de la feuille de verre qui peut ainsi être réorientée sans risque de marquage par les rouleaux.

De plus, le soufflage d'air chaud maintient la station de bombage en légère surpression par rapport au reste de l'installation et surtout la halle où celle-ci est bâtie. De cette façon, on limite fortement les entrées d'air froid dans la station de bombage, excluant ainsi les interférences avec le soufflage de trempe, ce qui permet d'une part un meilleur contrôle de la qualité du formage et d'autre part une amélioration des cadences de fabrication, deux vitrages pouvant simultanément être traités, le premier étant encore en cours de trempe lorsque débute le formage du second.

Les auteurs de la présente invention ont constaté que la vitesse d'échauffement d'une feuille de verre au contact d'un élément supérieur surchauffé est pratiquement constante, si on excepte les deux premiers secondes du temps de séjour, et ceci jusqu'à environ 10 secondes et très régulière jusqu 'à environ 20 secondes. En modulant ce temps de séjour en fonction des différents cas et des écarts au galbe éventuellement constatés, on peut très facilement corriger certains défauts de bombage, et ceci même si la température des feuilles de verre entrant dans la station de bombage est insuffisante pour le rayon de courbure souhaitée. Pour une épaisseur de feuilles de verre donnée, les paramètres de fonctionnement du four de réchauffage peuvent ainsi être maintenus rigoureusement constants et les seuls réglages à effectuer concernent l'intensité et/ou la temperature du flux d'air chaud dirigé contre l'élément supérieur. Il s'agit là de deux paramètres faciles à maîtrisés et qui de plus agissent à un stade relativement tardif du procédé d'obtention des vitrages, de sorte que l'efficacité d'un réglage peut être très rapidement évaluée ce qui n'est pas le cas avec le four de réchauffage dont l'inertie thermique est toujours assez grande.

Lorsque les feuilles de verre sont émaillées, le point crucial n'est pas tant la durée du séjour au contact de l'élément supérieur que la température élevée de cet élément supérieur qui agit à la manière d'un gril provoquant instantanément la cuisson en surface de l'émail. Si on conjugue pour la même zone de la feuille de verre la nécessité d'une cuisson de l'émail et d'un formage selon un petit rayon de courbure (ce qui est bien souvent le cas des vitrages automobiles, tels les lunettes arrières comportant des ailes marginales repliées et une couche d'émail formant encadrement destiné à masquer la colle utilisée pour le montage du vitrage dans le véhicule, on pourra éventuellement être amené à travailler avec un élément supérieur fortement surchauffé, tout en maintenant un temps de séjour à son contact relativement élevé.

L'invention a également pour objet un dispositif pour la mise en oeuvre du procédé selon l'invention. Ce dispositif est constitué par une station de chargement à plat des feuilles de verre, un four de réchauffage traversé par un convoyeur par exemple à rouleaux, une station de bombage montée à l'extrémité du four de réchauffage, constituée par une enceinte fermée munie d'ouvertures pour les entrées et sorties, et d'une station de refroidissement notamment de trempe thermique. La station de bombage comporte un élément supérieur éventuellement en forme, éventuellement des moyens pour positionner la feuille de verre sous ledit élément supérieur et des moyens aptes à soulever la feuille de verre pour la plaquer contre l'élément supérieur, des moyens aptes à acheminer la feuille de verre vers la station de refroidissement par exemple en la déposant sur un élément inférieur de préférence constitué par un cadre annulaire, la station de bombage étant en outre pourvue selon l'invention de conduites à circulation forcées, montées sur un bâti solidaire de l'élément supérieur dans ses mouvements verticaux, et envoyant dans la station de bombage des fumées chaudes de brûleurs placés à l'extérieur de celle-ci.

Lorsque la ligne de production est conforme aux enseignements des demandes de brevets FR-A-2085464, EP-A-240418 ou EP-A-241355 dans le sens que l'élément supérieur est placé dans un caisson sans fond mis sous dépression, ce caisson sert de préférence de bâti support des conduites à circulation forcée, des ouvertures étant ménagées dans les parois du caisson pour laisser passer les fumées en direction de l'élément supérieur, l'espace intercalaire entre l'élément supérieur et le caisson étant insuffisant pour autoriser le montage des conduites qui doivent de ce fait être fixées à l'extérieur du caisson.

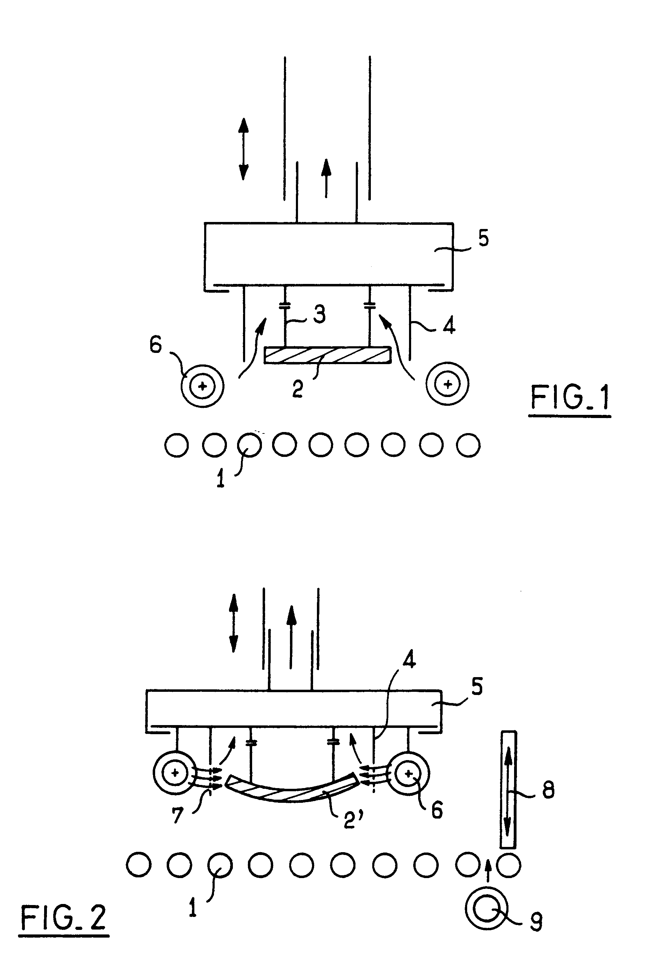

D'autres détails et caractéristiques avantageuses de l'invention sont décrites ci-après en référence aux dessins annexés qui représentent :
. figure 1 : une vue schématique d'une station de bombage comportant un élément supérieur plan et des conduites à circulation forcée fixes,
. figure 2 : une vue schématique d'une autre station de bombage comportant un élément supérieur convexe et des conduites à circulation forcée fixées au caisson sous dépression.

A la figure 1 sont schématisés les éléments constitutifs essentiels d'une station de bombage dans laquelle le formage s'opère par inertie et gravité, conformément aux enseignements des demandes de brevets EP-A-3391 et EP-A-240418. Préchauffée dans un four traversant, la feuille de verre pénètre dans la station de bombage par un convoyeur à rouleaux 1. Même si les rouleaux sont d'un diamètre petit, il existe toujours un espace entre les rouleaux, de sorte que ceux-ci soutiennent le verre de manière non uniforme et qu'il peut se produire un affaissement du verre chaud sous son propre poids. Par des moyens de positionnement frontal et/ou latéral appropriés, la feuille de verre est arrêtée sous un élément supérieur plan 2, fixé de manière amovible par des barres 3 à un caisson sans fond 4 qui coulisse par un montage du type tiroir sous une chambre dépressurisée 5. Cette chambre 5 est reliée à une dispositif d'aspiration du type trompe sous vide et est susceptible de mouvements de montée-baisse. Pour un cycle de bombage, la chambre 5 est abaissée de manière à rapprocher l'élément supérieur 2 de la feuille de verre et on met en route le dispositif d'aspiration de façon à créer une dépression au voisinage de la périphérie de la feuille de verre, ce qui a pour effet de soulever celle-ci et de la plaquer contre l'élément supérieur dont la surface est de préférence munie d'un revêtement qui adoucit le contact verre-métal ou verre- céramique réfractaire suivant la nature de l'élément supérieur 2. Dès que la feuille de verre est au contact de l'élément supérieur 2, l'ensemble de outils (2, 3, 4, 5) est remonté ce qui permet d'introduire sous la feuille de verre un cadre annulaire ouvert en son centre dont le pourtour présente la forme souhaitée conférer à la feuille de verre. Celle-ci est alors relâchée sur le cadre et en raison de sa température élevée se déforme sur celui-ci sous l'effet de la gravité et éventuellement de l'inertie de sa chute. D'autres détails ou précisions sur ce procédé de bombage connu figurent dans les publications précitées.

Conformément à l'invention, la station de bombage comporte également des conduites à circulation forcée 6 qui entourent le caisson 4 et sont ici fixées à la hauteur de l'élément supérieur 2 en position haute, c'est-à-dire en position d'attente entre deux feuilles de verre. Ces conduites 6 sont alimentées en fumées chaudes par un brûleur placé hors de la station de bombage et sont par exemple du type conduites à ailettes. On peut également utiliser des brûleurs placés directement dans la station de bombage ou d'autres éléments de chauffage, notamment par rayonnement, associés dans ce dernier cas à une aspiration permanente pour la formation d'un flux gazeux.

Les conduites 6 réchauffent préférentiellement les marges de l'élément supérieur 2 dont la température peut au moins localement excéder de près de 150° la température de la feuille de verre à son entrée dans la station de bombage. Au contact de l'élément supérieur 2, la feuille de verre pompe une partie des calories et accroît sa température surtout en regard des zones les plus chaudes de l'élément supérieur 2. Les zones surchauffées de la feuille de verre sont plus malléables et peuvent subir un formage selon un petit rayon de courbure. Pour les parties restantes de la feuille de verre, très peu ou pas du tout bombées, une température inférieure à 650° C et de préférence à 630° C est suffisante pour assurer une trempe correcte et il est donc inutile de préchauffer plus la feuille de verre dans le four.

En modifiant par exemple l'orientation des ailettes et/ou la température des fumées chaudes et/ou leur débit, il est possible de moduler la surchauffe de l'élément supérieur, tant du point de vue de son intensité de celui des dimensions de la surface surchauffée. De ce fait, dans tous les cas de figures on peut opérer avec la même température de sortie de four ce qui présente l'avantage - outre l'absence de formations de défauts optiques - d'un fonctionnement à paramètres constants du four ce qui est un gage d'un fonctionnement sans souci. Par ailleurs, les réglages qui concernent les paramètres de surchauffe de l'élément supérieur sont eux très rapides et surtout leur effet est quasi immédiat.

La description ci-dessus concerne une unité de production de vitrages bombés-trempés mais la même unité peut être utilisée pour une trempe sans bombage de feuilles de verre émaillées, le cadre annulaire récupérant les feuilles de verre relâchées par l'élément supérieur ayant dans ce cas un profil plat. Ce cadre annulaire sert par ailleurs de support des feuilles de verre pendant la trempe.

D'autre part, l'invention peut s'appliquer mutatis mutandis à des installations de bombage selon lesquelles le verre est soulevé par une dépression créée au-dessus de toute la surface de la feuille de verre ou est soulevé mécaniquement au moyen d'un cadre. Le formage du verre peut également être obtenu au moyen d'un courant ascendant d'air chaud. Dans ce dernier cas, deux courants d'air chaud ascendants agissent tour à tour, le premier, conforme à la présente invention, sert à la surchauffe de l'élément supérieur, tandis que le second est dirigé contre la feuille de verre et permet d'opérer en quelque sorte un pressage pneumatique. Ce second courant ascendant doit de toute façon être interrompu ou au moins fortement réduit lors du positionnement d'une feuille de verre sous l'élément supérieur.

La figure 2 est une vue schématique d'une variante de l'invention. Comme précédemment la station de bombage comporte un convoyeur 1 au-dessus duquel est placé, selon une hauteur variable, une chambre dépressurisée 5 sous laquelle est placé un caisson sans fond 4 dans lequel est monté par des barres 3 un élément supérieur 2'. Cet élément supérieur 2' est ici constitué par une forme de bombage mâle convexe dont la courbure correspond à toute ou partie de la courbure que l'on désire conférer à la feuille de verre. Après s'être déformée en épousant la courbure de l'élément supérieur 2', la feuille de verre formée ou préformée est déposée sur une forme de bombage femelle par exemple constituée par un cadre annulaire sur laquelle elle est conduite vers la station de refroidissement notamment de trempe. Le procédé et les outils de bombage utilisés sont décrits en détail dans les demandes de brevets FR-A-2085464 et EP-A-241355.

Dans la variante ici schématisée, les conduites à circulation forcée 6 sont fixées sur le caisson 4 et suivant de ce fait les mouvements verticaux de l'élément supérieur 2. Les conduites 6 sont connectées aux conduits acheminant les fumées depuis les brûleurs jusque dans la station de bombage par des flexibles réalisés dans un matériau susceptible de supporter la température élevée régnant dans la station de bombage ou par des montages de tubes coulissants les uns dans les autres. Les conduites 6 peuvent être fixées à l'intérieur du caisson ou comme ici représenté à l'extérieur de celui-ci, des ouvertures 7 état ménagées dans les parois du caisson 4 pour laisser passer les fumées chaudes en direction de l'élément supérieur 2 comme les flèches le suggèrent.

Avantageusement, la station de bombage est en outre pourvue de moyens propres à générer un courant d'air chaud parallèle à la porte 8 communiquant avec la station de trempe. Ces moyens complétant l'effet de la surpression due au soufflage d'air chaud par les conduites 6 de façon à interdire toute pénétration d'air froid dans l'enceinte de la station de bombage. Ces moyens sont par exemple constitués par une conduite à circulation forcée 9 qui est de préférence branchée en dérivation des conduites principales 6 et peut être alimentée de façon permanente ou seulement lors de l'ouverture de la porte 8.

L'invention convient plus particulièrement à la production de vitrages en forme présentant un encadrement émaillé et d'une grande qualité optique. Elle peut avantageusement être mise en place dans une unité de fabrication existante dont la gamme de produits est ainsi élargie.

## Revendications

1. Procédé d'obtention de vitrages bombés et/ou émaillés selon lequel les feuilles de verre sont chargées à plat une à une dans un four de réchauffage qu'elles traversent convoyées par exemple par un lit de rouleaux (1 ), amenées dans une station de bombage montée à l'extrémité du four de réchauffage, constituée par une enceinte fermée éventuellement isolée thermiquement, et sont conduites dans une station de refroidissement notamment de trempe thermique ; lesdites feuilles de verre étant positionnées dans la station de bombage sous un élément supérieur (2, 2') éventuellement en forme, sont soulevées puis plaquées contre ledit élément supérieur (2, 2') puis acheminées vers une station de refroidissement, caractérisé en ce que la température des feuilles de verre quand elles entrent dans la station de bombage est assez basse pour éviter des défauts du type ondulations et en ce qu'on opère un soufflage d'air chaud en direction de l'élément supérieur (2, 2') entre deux traitements successifs, de sorte que l'élément supérieur est réchauffé à une température suffisante pour essentiellement compléter le réchauffement des feuilles de verre pour leur bombage et/ou pour la cuisson en surface de l'émail quand lesdites feuilles de verre sont mises en contact avec l'élément supérieur.

2. Procédé selon la revendication 1, caractérisé en ce que le soufflage d'air chaud est poursuivi jusqu'à ce que la feuille de verre soit déposée sur un élément inférieur.

3. Procédé selon l'une des revendications précédentes, caractérisé en ce que le soufflage d'air chaud n'est pas uniforme pour toutes les parties de l'élément supérieur (2, 2').

4. Procédé selon la revendication 3, caractérisé en ce que le soufflage d'air chaud est dirigé de préférence vers les zones marginales de l'élément supérieur (2, 2').

5. Procédé selon la revendication 4, caractérisé en ce que le soulèvement de la feuille de verre est obtenu par une aspiration due à une dépression créée au voisinage de la périphérie de la feuille de verre, et en ce que ladite aspiration est maintenue lors du soufflage d'air chaud pour canaliser celui-ci vers les zones marginales de l'élément supérieur (2, 2').

6. Procédé selon l'une des revendications précédentes, caractérisé en ce que la différence de température entre l'élément supérieur (2, 2') surchauffé et la feuille de verre entrant dans la station de bombage est comprise entre 20 et 150 °C.

7. Procédé selon l'une des revendications précédentes, caractérisé en ce que la feuille de verre est maintenue plaquée contre ledit élément supérieur (2, 2') pendant une durée comprise entre 2 et 20 secondes.

8. Procédé selon l'une des revendications précédentes, caractérisé en ce que la température des feuilles de verre entrant dans la station de bombage est inférieure à 630 °C pour des feuilles de verre de plus de 3,2 mm d'épaisseur et à 615 °C pour des feuilles de verre de 2 mm d'épaisseur.

9. Application du procédé selon l'une des revendications 1 à 8 à la réalisation de vitrages comportant un encadrement émaillé.

10. Application du procédé selon l'une des revendications 1 à 8 à la réalisation de vitrages à courbure prononcée.

11. Dispositif pour la mise en oeuvre du procédé selon l'une des revendications 1 à 8, constitué par une station de chargement à plat des feuilles de verre, un four de réchauffage traversé par un convoyeur par exemple à rouleaux, une station de bombage fermée, montée à l'extrémité du four de réchauffage munie d'ouvertures d'entrées et sorties ladite station de bombage comportant un élément supérieur (2, 2') éventuellement en forme, éventuellement des moyens pour positionner la feuille de verre sous ledit élément supérieur et des moyens (4, 5) aptes à soulever la feuille de verre pour la plaquer contre l'élément supérieur, des moyens d'acheminement de la feuille de verre vers une station de refroidissement, la station de bombage étant en outre pourvue de moyens (6) propres à générer un flux d'air chaud en direction de l'élément supérieur (2, 2'), caractérisé en ce que lesdits moyens (6) propres à générer un flux d'air chaud sont constitués par un ou plusieurs brûleurs placés à l'extérieur de la station de bombage dont les fumées chaudes sont envoyées dans la station de bombage au moyen de conduites (6) à circulation forcée montées sur un bâti solidaire de l'élément supérieur dans ses mouvements verticaux.

12. Dispositif selon la revendication 11, caractérisé en ce que lesdites conduites à circulation forcée (6) sont fixées à l'intérieur d'un caisson sans fond (4), sous dépression, entourant l'élément supérieur (2, 2').

13. Dispositif selon la revendication 11, caractérisé en ce que les conduites à circulation forcée (6) sont fixées à l'extérieur d'un caisson sans fond (4), sous dépression, entourant l'élément supérieur, des ouvertures (7) étant ménagées dans les parois dudit caisson (4) de façon à laisser passer les fumées chaudes soufflées en direction de l'élément supérieur (2, 2').

14. Dispositif selon l'une des revendications 11 à 13, caractérisé en ce que la station de bombage comporte en outre des moyens propres à générer un rideau d'air chaud parallèle à la porte de communication des stations de trempe et de bombage.

15. Dispositif selon la revendication 14, caractérisé en ce que lesdits moyens propres à générer un rideau d'air chaud sont constitués par une conduite à circulation forcée branchée en dérivation des conduites principales dirigées vers l'élément supérieur.

## Patentansprüche

1. Verfahren zur Herstellung von gebogenen und/ oder emaillierten Verglasungen, nach dem die Glasscheiben nacheinander flach in einen Wiedererwärmungsofen eingegeben, den sie beispielsweise befördert von einem Rollenträger (1) durchlaufen, in eine am Ende des Wiedererwärmungsofens angeordnete Biegestation gebracht, die von einem gegebenenfalls wärmeisolierten geschlossenen Gehäuse gebildet ist, und in eine Kühl-, insbesondere eine thermische Abschreckstation transportiert werden; wobei diese Glasscheiben in der Biegestation unter ein gegebenenfalls geformtes Oberteil (2,2') positioniert, angehoben, anschließend an dieses Oberteil (2,2') angelegt und danach zu einer Kühlstation befördert werden, dadurch gekennzeichnet, daß die Temperatur der Glasscheiben bei deren Eintritt in die Biegestation genügend niedrig ist, um Fehler des Welligkeitstyps zu vermeiden und daß Heißluft in Richtung des Oberteils (2,2') zwischen zwei aufeinanderfolgenden Behandlungen derart eingeblasen wird, daß das Oberteil auf eine Temperatur gebracht wird, die ausreichend ist, um das Wiederererhitzen der Glasscheiben für deren Biegen und/oder das Einbrennen des Emails auf der Oberfläche im wesentlichen zu vollenden, wenn diese Glasscheiben mit dem Oberteil in Berührung gebracht werden.

2. Verfahren nach Anspruch 1, dadurch gekennzeichnet, daß das Einblasen von Heißluft solange durchgeführt wird, bis die Glasscheibe auf einem Unterteil abgelegt ist.

3. Verfahren nach einem der vorhergehenden Ansprüche, dadurch gekennzeichnet, daß das Einblasen von Heißluft nicht für alle Bereiche des Oberteils (2,2') gleichmäßig erfolgt.

4. Verfahren nach Anspruch 3, dadurch gekennzeichnet, daß das Einblasen von Heißluft vorzugsweise auf die Randbereiche des Oberteils (2,2') gerichtet ist.

5. Verfahren nach Anspruch 4, dadurch gekennzeichnet, daß das Anheben der Glasscheibe durch ein Ansaugen erfolgt, das durch einen in der Nähe des Umfangs der Glasscheibe erzeugten Unterdruck bewirkt wird und daß diese Ansaugung während des Einblasens von Heißluft beibehalten wird, um sie auf die Randbereiche des Oberteils (2,2') zu richten.

6. Verfahren nach einem der vorhergehenden Ansprüche, dadurch gekennzeichnet, daß die Temperaturdifferenz zwischen dem überhitzten Oberteil (2,2') und der in die Biegestation eintretenden Glasscheibe 20 bis 150 °C beträgt.

7. Verfahren nach einem der vorhergehenden Ansprüche, dadurch gekennzeichnet, daß die Glasscheibe während eines Zeitraums von 2 bis 20 Sekunden an das Oberteil (2,2') gepreßt gehalten wird.

8. Verfahren nach einem der vorhergehenden Ansprüche, dadurch gekennzeichnet, daß die Temperatur der in die Biegestation eintretenden Glasscheiben bei Glasscheiben mit einer Dicke von mehr als 3,2 mm unter 630 °C und für Glasscheiben von 2 mm Dicke unter 615 °C liegt.

9. Anwendung des Verfahrens nach einem der Ansprüche 1 bis 8 zur Herstellung von Verglasungen, die eine emaillierte Einfassung enthalten.

10. Anwendung des Verfahrens nach einem der Ansprüche 1 bis 8 zur Herstellung von Verglasungen, die eine deutliche Krümmung aufweisen.

11. Vorrichtung zur Durchführung des Verfahrens nach einem der Ansprüche 1 bis 8, bestehend aus einer Station zur flachen Beschickung der Glasscheiben, einem von einem Förderer, beispielsweise einem Rollenförderer, durchlaufenen Wiedererwärmungsofen und einer am Ende des Wiedererwärmungsofens angeordneten geschlossenen Biegestation, die mit Eintritts- und Austrittsöffnungen versehenen ist, wobei diese Biegestation ein gegebenfalls geformtes Oberteil (2,2'), gegebenenfalls Mittel zur Positionierung der Glasscheibe unter dieses Oberteil und Mittel (4,5) zum Anheben der Glasscheibe, um sie an das Oberteil anzulegen, und Mittel zum Transport der Glasscheibe zu einer Kühlstation umfaßt und diese Biegestation außerdem mit geeigneten Mitteln (6) zur Erzeugung eines Heißluftstroms in Richtung des Oberteils (2,2') ausgerüstet ist, dadurch gekennzeichnet, daß diese Mittel (6), die zur Erzeugung eines Heißluftstroms geeignet sind, aus einem oder mehreren Brennern bestehen, die außerhalb der Biegestation angeordnet sind und deren heiße Rauchgase in die Biegestation durch Zwangsumlaufleitungen (6) geführt werden, die auf einem Rahmen befestigt sind, der mit dem Oberteil in seinen senkrechten Bewegungen fest verbunden ist.

12. Vorrichtung nach Anspruch 11, dadurch gekennzeichnet, daß diese Zwangsumlaufleitungen (6) auf der Innenseite eines unter Unterdruck stehenden bodenfreien Kastens (4) befestigt sind, der das Oberteil (2,2') umgibt.

13. Vorrichtung nach Anspruch 11, dadurch gekennzeichnet, daß die Zwangsumlaufleitungen (6) auf der Außenseite eines unter Unterdruck stehenden bodenfreien Kastens (4) befestigt sind, der das Oberteil umgibt, und Öffnungen (7) derart in den Wänden dieses Kastens (4) angebracht sind, daß sie die in Richtung des Oberteils (2,2') eingeblasenen heißen Rauchgase einströmen lassen.

14. Vorrichtung nach einem der Ansprüche 11 bis 13, dadurch gekennzeichnet, daß die Biegestation außerdem geeignete Mittel zur Erzeugung eines Heißluftvorhangs umfaßt, der sich parallel zur Verbindungstür der Biege- und Abschreckstation befindet.

15. Vorrichtung nach Anspruch 14, dadurch gekennzeichnet, daß diese geeigneten Mittel zur Erzeugung eines Heißluftvorhangs aus einer Zwangsumlaufleitung bestehen, die von den zum Oberteil gerichteten Hauptleitungen abzweigt.

## Claims

1. Processfortheproductionofbentand/orenamel- led panes, according to which the glass sheets are charged flat, one by one, into a reheating furnace through which they pass conveyed, for example, by a bed of rollers (1), are brought into a bending station mounted at the end of the reheating furnace, constituted of a closed, possibly thermally insulated enclosure, and are conducted into a cooling station, notably thermal toughening station; said glass sheets being positioned in the bending station beneath an upper element (2, 2'), possibly shaped element, are raised and then placed against said upper element (2, 2') and then brought to a cooling station, characterized in that the temperature of the glass sheets when they enter the bending station is sufficiently low to avoid defects of the undulating type and in that a hot air blowing is carried out towards the upper element (2, 2') between two successive treatments, so that the upper element is heated to a sufficient temperature for essentially completing the heating of the glass sheets for their bending and/or forthe baking onto the surface of the enamel when said glass sheets are brought into contact with the upper element.

2. Process according to Claim 1, characterized in that the blowing of hot air is continued until the glass sheet is deposited on a lower element.

3. Process according to one of the preceding Claims, characterized in that the blowing of hot air is not uniform for all the parts of the upperele- ment (2, 2').

4. Process according to Claim 3, characterized in that the blowing of hot air is directed preferably towards the marginal zones of the upper element (2, 2').

5. Process according to Claim 4, characterized in that the raising of the glass sheet is produced by a suction caused by a rediiced pressure created in the vicinity of the periphery of the glass sheet, and in that said suction is maintained during the blowing of hot air for channelling this hot air towards the marginal zones of the upper element (2, 2').

6. Process according to one of the preceding Claims, characterized in that the difference in temperature between the additionally heated upper element (2, 2') and the glass sheet entering the bending station is between 20 and 150°C.

7. Process according to one of the preceding Claims, characterized in that the glass sheet is held against said upper element (2, 2') for a period of between 2 and 20 seconds.

8. Process according to one of the preceding Claims, characterized in that the temperature of the glass sheets entering the bending station is less than 630°C for glass sheets of more than 3.2 mm thickness and less than 615°C for glass sheets of 2 mm thickness.

9. Application of the process according to one of Claims 1 to 8 to the production of panes comprising an enamelled border.

10. Application of the process according to one of Claims 1 to 8 to the production of panes having pronounced curvature.

11. Device for carrying out the process according to one of Claims 1 to 8, constituted of a station for charging the glass sheets flat, a reheating fur- nance traversed by a conveyor, for example roller conveyor, a closed bending station mounted at the end of the reheating furnace and provided with inlet and outlet openings; said bending station comprising an upper element (2,2'), possibly shaped element, possibly also means for positioning the glass sheet beneath said upper element and means (4, 5) adapted for raising the glass sheet to place it against the upper element, means for bringing the glass sheet to a cooling station, the bending station being, in addition, provided with means (6) adapted for generating a hot air flow towards the upper element (2, 2'), characterized in that said means (6) adapted for generating a hot airflow are constituted of one or more burners situated outside the bending station, from which the hot smoke gases are fed into the bending station by means of forced flow ducts (6) mounted on a frame integral with the upper element in its vertical movements.

12. Device according to Claim 11, characterized in that said forced flow ducts (6) are fixed inside an open-bottomed box (4), subject to reduced pressure, surrounding the upper element (2, 2').

13. Device according to Claim 11, characterized in that the forced flow ducts (6) are fixed outside an open-bottomed box (4), subject to reduced pressure, surrounding the upper element, openings (7) being formed in the walls of said box (4) in such a way as to allow the passage of the hot smoke gases blown towards the upper element (2, 2').

14. Device according to one of Claims 11 to 13, characterized in that the bending station comprises, in addition, means adapted for generating a hot air curtain parallel to the communicating door between the toughening and bending stations.

15. Device according to Claim 14, characterized in that said means adapted for generating a hot air curtain are constituted of a forced flow duct branched from the principal ducts directed towards the upper element.
